(19) Europäisches Patentamt
European Patent Office
Office européen des brevets

(11) **EP 2 416 127 B1**

(12) **EUROPEAN PATENT SPECIFICATION**

(45) Date of publication and mention
of the grant of the patent:
**25.03.2015  Bulletin 2015/13**

(51) Int Cl.:
*G01F 1/56* (2006.01)     *G01F 1/58* (2006.01)
*G01F 1/74* (2006.01)     *G01F 1/64* (2006.01)
*G01N 23/12* (2006.01)     *G01N 27/04* (2006.01)
*G01N 27/22* (2006.01)     *G01N 33/28* (2006.01)

(21) Application number: **10461526.5**

(22) Date of filing: **14.07.2010**

(54) **A method and a device for measuring component fractions in a multi-phase flow**

Verfahren und Vorrichtung zum Messen von Bestandteilanteilen in einem mehrphasigen Fluss

Procédé et dispositif pour mesurer des fractions de composants dans un flux à phases multiples

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**08.02.2012  Bulletin 2012/06**

(73) Proprietor: **Politechnika Lodzka**
**90-924 Lodz (PL)**

(72) Inventors:
• **Sankowski, Dominik**
**90-924 Lodz (PL)**
• **Nowakowski, Jacek**
**90-924 Lodz (PL)**
• **Hammer, Erling**
**90-924 Lodz (PL)**
• **Babout, Laurent**
**90-924 Lodz (PL)**
• **Banasiak, Robert**
**90-924 Lodz (PL)**
• **Chaniecki, Zbigniew**
**90-924 Lodz (PL)**
• **Grudzien, Krzysztof**
**90-924 Lodz (PL)**
• **Janaszewski, Marcin**
**90-924 Lodz (PL)**
• **Mosorow, Wlodzimierz**
**90-924 Lodz (PL)**
• **Romanowski, Andrzej**
**90-924 Lodz (PL)**
• **Wajman, Radoslaw**
**90-924 Lodz (PL)**

(74) Representative: **Pawlowski, Adam**
Eupatent.PL
**ul. Zeligowskiego 3/5**
**90-752 Lodz (PL)**

(56) References cited:
**US-A1- 2009 126 502**

• **ISMAIL I ET AL: "Tomography for multi-phase flow measurement in the oil industry", FLOW MEASUREMENT AND INSTRUMENTATION, BUTTERWORTH-HEINEMANN, OXFORD, GB, vol. 16, no. 2-3, 1 April 2005 (2005-04-01), pages 145-155, XP004938306, ISSN: 0955-5986, DOI: DOI:10.1016/J.FLOWMEASINST.2005.02.017**
• **YI LI ET AL: "Measurement of multi-phase distribution using an integrated dual-modality sensor", IMAGING SYSTEMS AND TECHNIQUES, 2009. IST '09. IEEE INTERNATIONAL WORKSHOP ON, IEEE, PISCATAWAY, NJ, USA, 11 May 2009 (2009-05-11), pages 335-339, XP031472943, ISBN: 978-1-4244-3482-4**
• **JOHANSEN G A ET AL: "A dual sensor flow imaging tomographic system", MEASUREMENT SCIENCE AND TECHNOLOGY, IOP, BRISTOL, GB, vol. 7, no. 3, 1 March 1996 (1996-03-01), pages 297-307, XP020063981, ISSN: 0957-0233, DOI: DOI:10.1088/0957-0233/7/3/010**
• **HAMMER E A ET AL: "Multimodality Tomography for Multiphase Hydrocarbon Flow Measurements", IEEE SENSORS JOURNAL, IEEE SERVICE CENTER, NEW YORK, NY, US, vol. 5, no. 2, 1 April 2005 (2005-04-01), pages 153-160, XP011128734, ISSN: 1530-437X, DOI: DOI: 10.1109/JSEN.2005.843903**

**Description**

The invention relates to measuring component fractions in a multi-phase flow, in particular to measuring fractions of water, oil and gas in multi-phase flows of crude oil production pipes.

Crude oil production lines require precise measurement of the fractions of components. Various measurement techniques have been developed, but they do not achieve the measurement accuracy desired by the industry. Depending on the inclination of a pipe (vertical, inclined or horizontal) and flow conditions, different flow regimes may form in the pipe, such as a laminar or stratified flows, symmetrical or non-symmetrical annular gas concentration flows, or mixed flows. The currently known measurement devices aim to detect one type of flow, for example the well mixed flow, and therefore are applicable to for example only vertical pipes.

A US patent application US2009/0126502 "Method and apparatus for tomographic multiphase flow measurements" presents a method which involves conditioning a multi-component mixture flow to create a symmetrical annular gas concentration flow condition and based on the knowledge of determined densities and/or electrical permittivity of the components of the fluid mixture, calculating the volume and/or mass flow rates of the gas and liquid components of the fluid mixture. By conditioning the mixture flow to create a symmetrical flow, the apparatus can utilize a low number of impedance electrodes, displaced at an angle of 90 degrees to each other, to perform simplified tomographic measurements of the liquid component. The apparatus may also utilize a single photon source and a plurality of detectors to perform simplified measurements of the gas component. The apparatus can determine the ratio of components only in a symmetrical annular gas concentration flow.

The aim of the present invention is to provide a method and a device for measuring component fractions of a multi-phase flow, capable of detecting different flow regimes without the need to condition the flow, therefore being applicable to horizontal, vertical and/or inclined pipes.

The object of the invention is a method for measuring component fractions in a multi-phase flow in a pipe, the components forming conductive and/or non-conductive regions in the multi-phase flow, the method comprising the steps of collecting, from an Electric Inductance Tomography (EIT) system with a plurality of electrodes arranged evenly at the periphery of a cross-section of the pipe, resistance measurement data and capacitance measurement data indicative of different areas of the cross-section of the pipe, collecting, from a Gamma Ray Tomography (GRT) system with at least two gamma source-detector pairs arranged evenly at the periphery of a cross-section of the pipe, gamma detector data, determining a distribution of the conductive region based on the resistance measurement data, determining a distribution of the non-conductive region based on the capacitance measurement data, and determining the fractions of components based on the distribution of the conductive region or non-conductive region corrected by gamma detector data in at least one iteration.

The resistance measurement data can be provided as values of resistance between all combinations of pairs of resistance-measurement electrodes, the capacitance measurement data are provided as values of capacitance between all combinations of pairs of capacitance-measurement electrodes, and the gamma detector data are provided as impulse counts measured by the gamma detectors.

The method may comprise the steps of determining a first estimate of the fraction of one of the components based on the distribution of the conductive or non-conductive region and determining the first estimate of the fractions of the other components based on the gamma detector data.

The step of determining the estimate of the fractions of the components based on the gamma detector data can be iterated until the difference between estimates in consecutive iterations is below a predetermined threshold.

The components can be water, oil and gas and the determination of the estimate of the fractions of the components is based on the following equations:

$$\alpha_{gas} = \frac{\ln \dfrac{I_{mix}}{I_{oil}} - \alpha_w \ln \dfrac{I_w}{I_{oil}}}{\ln \dfrac{I_{gas}}{I_{oil}}}$$

$$\alpha_{oil} = \frac{\ln \dfrac{I_{mix}}{I_w} - \alpha_{gas} \ln \dfrac{I_{gas}}{I_w}}{\ln \dfrac{I_{oil}}{I_w}}$$

$$\alpha_w = \frac{\ln\frac{I_{mix}}{I_{gas}} - \alpha_{oil}\ln\frac{I_{oil}}{I_{gas}}}{\ln\frac{I_w}{I_{gas}}}$$

where:

$\alpha_{gas}$, $\alpha_{oil}$, $\alpha_w$ are the fractions of the gas, oil and water components in the gamma beam,
$I_{gas}$, $I_{oil}$, $I_w$, $I_{mix}$, are impulse counts measured by the gamma detector for gas, oil, water and unknown mixture, respectively.

Another object of the present invention is a device for measuring component fractions in a multi-phase flow in a pipe, the components forming conductive and/or non-conductive regions in the multi-phase flow, the device comprising an Electric Inductance Tomography (EIT) system with a plurality of electrodes arranged evenly at the periphery of a cross-section of the pipe, and configured to provide resistance measurement data and capacitance measurement data indicative of different areas of the cross-section of the pipe, a Gamma Ray Tomography (GRT) system with at least two gamma source-detector pairs arranged evenly at the periphery of a cross-section of the pipe and configured to provide gamma detector data, a calculating unit configured to collect measurement data, determine a distribution of the conductive region based on the resistance measurement data, determine a distribution of the non-conductive region based on the capacitance measurement data, and determine the fractions of components based on the distribution of the conductive region and/or non-conductive region corrected by gamma detector data in at least one iteration.

The resistance measurement data can be provided as values of resistance between all combinations of pairs of resistance-measurement electrodes, the capacitance measurement data are provided as values of capacitance between all combinations of pairs of capacitance-measurement electrodes, and the gamma detector data are provided as impulse counts measured by the gamma detectors.

The electrodes may comprise a set of resistance-measurement plate electrodes arranged alternately with capacitance-measurement electrodes.

The electrodes may comprise a set of plate electrodes configured to function as resistance or capacitance electrodes, depending on the type of flow component between a particular pair of electrodes.

The electrodes may comprise a set of resistance-measurement pin electrodes arranged within capacitance-measurement plate electrodes.

The device may comprise at least 16 electrodes.

The electrodes and the gamma source-detector pairs can be arranged at the periphery of the same cross-section of the pipe.

The calculating unit can be configured to determine a first estimate of the fraction of one of the components based on the distribution of the conductive or non-conductive region and determine the first estimate of the fractions of the other components based on the gamma detector data.

The calculating unit can be configured to iterate the step of determining the estimate of the fractions of the components based on the gamma detector data until the difference between estimates in consecutive iterations is below a predetermined threshold.

The components can be water, oil and gas and the calculating unit can be configured to determine the estimate of the fractions of the components based on the following equations:

$$\alpha_{gas} = \frac{\ln\frac{I_{mix}}{I_{oil}} - \alpha_w\ln\frac{I_w}{I_{oil}}}{\ln\frac{I_{gas}}{I_{oil}}}$$

$$\alpha_{oil} = \frac{\ln\frac{I_{mix}}{I_w} - \alpha_{gas}\ln\frac{I_{gas}}{I_w}}{\ln\frac{I_{oil}}{I_w}}$$

$$\alpha_w = \frac{\ln\dfrac{I_{mix}}{I_{gas}} - \alpha_{oil} \ln\dfrac{I_{oil}}{I_{gas}}}{\ln\dfrac{I_w}{I_{gas}}}$$

where:

$\alpha_{gas}$, $\alpha_{oil}$, $\alpha_w$ are the fractions of the gas, oil and water components in the gamma beam,
$I_{gas}$, $I_{oil}$, $I_w$, $I_{mix}$, are impulse counts measured by the gamma detector for gas, oil, water and unknown mixture, respectively.

The object of the invention is shown in a drawing, on which:

Fig. 1 presents an exemplary embodiment of a device according to the invention.
Fig. 2 presents a cross-section of another embodiment of the device.
Fig. 3 presents a functional diagram of the device.
Fig. 4 presents steps of an iterative method for determining the fractions of water, oil and gas according to the invention.
Figs. 5-8 present different flow regimes detectable by the method and device according to the invention.
Fig. 9 presents a graph of electrical permittivity and conductivity of mixtures of water and oil.

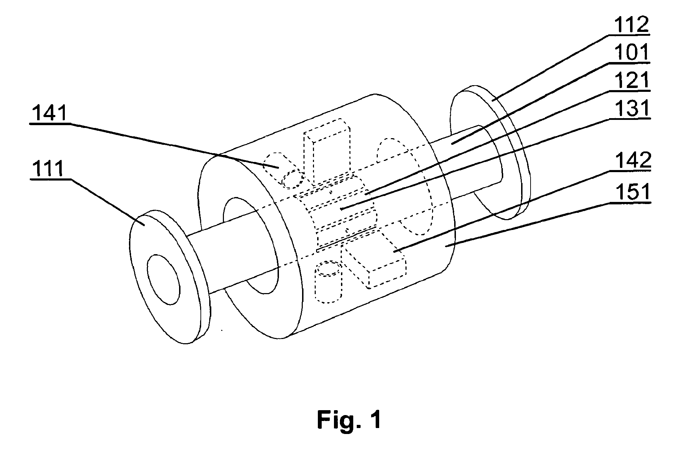

An exemplary embodiment of a device according to the invention is shown in Fig. 1. The device comprises a pipe 101 insertable to the crude oil production pipe via sealing collars 111, 112. The pipe 101 diameter is preferably the same as the crude oil production pipe diameter, such as not to disturb the flow. A plurality of electrodes 121, 131 of an Electric Inductance Tomography (EIT) system are arranged evenly at the periphery of the pipe 101. In the embodiment shown in Fig. 1, some of the electrodes are pin electrodes 131 configured to measure resistance. The pin electrodes 131 are arranged within plate electrodes 121 configured to measure capacitance. In addition, the device comprises two pairs of a gamma ray source 141 and a gamma ray detector 142 arranged at the outside of the periphery of the pipe, preferably mounted in a sleeve 151 of a gamma radiation insulator arranged coaxially with the pipe 101. Preferably, the electrodes 121, 131 and gamma ray source-detectors 141, 142 are arranged at a periphery of the same cross-section of the pipe 101, which guarantees measurement of the components at the same point and therefore the best measurement accuracy for flows in which the flow regime changes quickly with time.

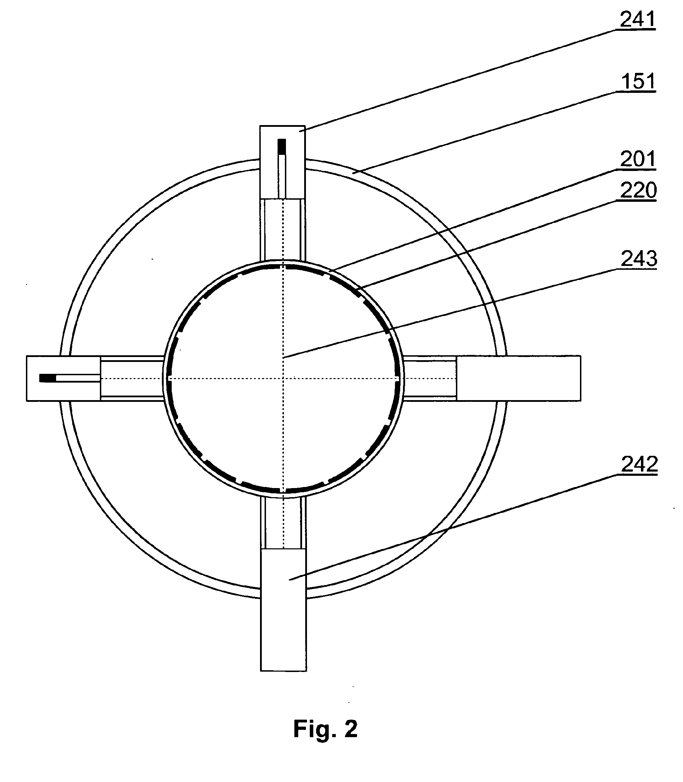

Fig. 2 presents a cross-section of another embodiment of the device. A plurality of plate electrodes 220 are arranged evenly at the periphery of the pipe, attached to the internal wall of the pipe 201. The plate electrodes 220 may be pre-configured to function as resistance-measurement or capacitance-measurement electrodes, for example every second electrode may be a resistance-measurement electrode and every other electrode may be a capacitance-measurement electrode, therefore the resistance-measurement electrodes are arranged alternately with capacitance-measurement electrodes. Alternatively, the electrodes may be configured to function as resistance or capacitance electrodes, depending on whether a conductive or a non-conductive region is formed between a particular pair of electrodes. The electrodes are configured to provide resistance measurement data and capacitance measurement data indicative of different areas of the cross-section of the pipe 201. In addition, a plurality of gamma ray sources 241 and gamma ray detectors 242, located opposite the gamma ray sources 241, are arranged evenly at the outside of the periphery of the pipe 201 and provide gamma detector data indicative of different diameters 243 of the pipe. Preferably, each gamma source-detector 241-242 pair is located such that the radiation path 243 passes through the spacing between electrodes. The gamma ray sources 241 and gamma ray detectors 242 are mounted within a sleeve 151 of gamma radiation insulator, for example a 5 mm thick sleeve made of lead.

The term "arranged evenly" as used with respect to even arrangement of the electrodes and source-detector pairs is to be understood such that the distances between the neighboring elements are the same for all elements.

Preferably, the device comprises at least 16 electrodes, which guarantees high accuracy of EIT system measurements.

The embodiments shown in Fig. 1 and 2 present two gamma source-detector pairs, which allow distinguishing between stratified and annular gas concentration flows. However, for better measurement accuracy, the system may comprise a higher number of gamma source-detector pairs.

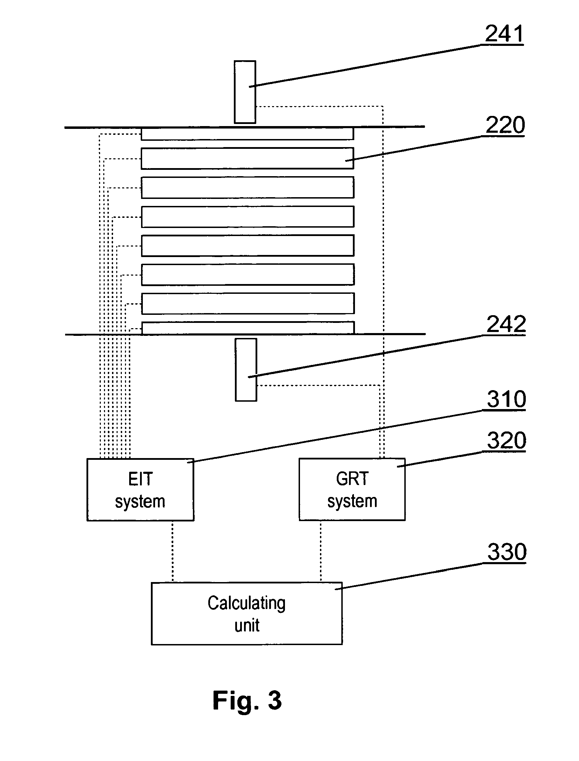

Fig. 3 presents a functional diagram of the device according to the embodiment shown in Fig. 2. The EIT system 310 is configured to provide resistance measurement data and capacitance measurement data collected from a plurality of electrodes 220 for different areas of the cross-section of the pipe 201. The resistance measurement data are provided as values of resistance between all combinations of pairs of resistance-measurement electrodes. The capacitance measurement data are provided as values of capacitance between all combinations of pairs of capacitance-measurement electrodes. The GRT system is configured to provide gamma detector data collected from at least two gamma source-detector pairs 241-242. The measurement data are collected in a calculating unit 330, configured to determine a distribution of the conductive region based on the resistance measurement data, determine a distribution of the non-conductive region based on the capacitance measurement data, determine the fractions of water, oil and gas based on the distribution of the conductive region and non-conductive region corrected by gamma detector data in at least one iteration, as explained in details below.

Before any measurements are performed, the measurement systems 310, 320 are calibrated for a given installation.

The Electric Capacitance Tomography (ECT) system, namely a subsystem of the EIT system with capacitance-measurement electrodes, is calibrated in three steps, for pipe filled with gas, oil and distilled water.

For pipe filled with gas,

$$C_i^{gas} = K_i^{gas} \varepsilon_0 \varepsilon_{gas}$$

For pipe filled with oil,

$$C_i^{oil} = K_i^{oil} \varepsilon_0 \varepsilon_{oil}$$

For pipe filled with distilled water,

$$C_i^{w_d} = K_i^{w_d} \varepsilon_0 \varepsilon_{w_d}$$

where:

$i$ = 1-2, 1-3, ..., 1-N, 2-3, 2-4, ..., 2-N, ... (N = total number of capacitance-measurement electrodes),
$C$ is the capacitance measured between a particular pair of capacitance-measurement electrodes,
$K_i$ are the calibration constants,
$\varepsilon_0$ is the electrical permittivity of the free space (vacuum),
$\varepsilon_{gas}$, $\varepsilon_{oil}$, $\varepsilon_{wd}$ are the electrical permitivities of gas, oil and distilled water, respectively.

Therefore, for all electrodes $K_i$ can be calculated using the following equation (1) and stored:

$$K_i^{gas} = \frac{C_i^{gas}}{\varepsilon_0 \varepsilon_{gas}} = K_i^{oil} = K_i^{w_d} = K_i \ (1)$$

The Electric Resistance Tomography (ERT) system, namely a sub-system of the EIT system with resistance-measurement electrodes, is calibrated for pipe filled with saline water:

$$K_i^w = R_i^w \sigma_{w_s} \quad (2)$$

where:

$\sigma_{ws}$ is the electrical conductivity of saline water.

The GRT system is calibrated in three steps, for pipe filled with gas, oil and water.

For pipe filled with gas,

$$I_{gas} = I_0 e^{-\mu_{gas} D - 2\mu_d d}$$

For pipe filled with oil,

$$I_{oil} = I_0 e^{-\mu_{oil}D - 2\mu_d d}$$

For pipe filled with water,

$$I_w = I_0 e^{-\mu_w D - 2\mu_d d}$$

where

$I_{gas}$, $I_{oil}$, $I_w$, are impulse counts measured by the gamma detector for gas, oil and water, respectively,
$I_0$ is the impulse count measured by the gamma detector for an empty pipe, $\mu_{gas}$. $\mu_{oil}$. $\mu_w$, are gamma radiation attenuation coefficients of gas, oil and water, respectively,
$\mu_d$ is the gamma radiation attenuation coefficient for the material of the pipe,
$d$ is the thickness of the pipe,
$D$ is the inner diameter of the pipe.

The calculating unit 330 operates according to the following principles. For a mixture of gas, oil and process water, the linear absorption coefficient along the gamma ray beam in the mixture will be:

$$\mu_{mix} = \mu_{gas}\alpha_{gas} + \mu_{oil}\alpha_{oil} + \mu_w\alpha_w$$

$$\alpha_{gas} + \alpha_{oil} + \alpha_w = 1, \ \alpha_{oil} = 1 - \alpha_{gas} - \alpha_w$$

which gives:

$$\mu_{mix} = \alpha_{gas}(\mu_{gas} - \mu_{oil}) + \alpha_w(\mu_w - \mu_{oil}) + \mu_{oil}$$

where

$\alpha_{gas}$, $\alpha_{oil}$, $\alpha_w$ are the fractions of the gas, oil and water components in the gamma beam.

Therefore,

$$I_{mix} = I_0 e^{-\mu_{mix}D - 2\mu_d d} = I_0 e^{-\alpha_{gas}(\mu_{gas} - \mu_{oil})D - \alpha_w(\mu_w - \mu_{oil})D - \mu_{oil}D - 2\mu_d d}$$

$$\frac{I_{mix}}{I_{gas}} = e^{-\alpha_{gas}(\mu_{gas} - \mu_{oil})D - \alpha_w(\mu_w - \mu_{oil})D - (\mu_{oil} - \mu_g)D}$$

$$\frac{I_{mix}}{I_{oil}} = e^{-\alpha_{gas}(\mu_{gas} - \mu_{oil})D - \alpha_w(\mu_w - \mu_{oil})D}$$

$$\frac{I_{mix}}{I_w} = e^{-\alpha_{gas}(\mu_{gas} - \mu_{oil})D - \alpha_w(\mu_w - \mu_{oil})D - (\mu_{oil} - \mu_w)D}$$

Since $\alpha_w$ is known from the EIT measurement data, the GRT measurement data can be used to find $\alpha_{gas}$ as:

$$\alpha_{gas} = -\frac{\ln\dfrac{I_{mix}}{I_{oil}} + \alpha_{w}(\mu_{w} - \mu_{oil})D}{(\mu_{g} - \mu_{oil})D}$$

$$\ln\frac{I_{gas}}{I_{oil}} = -(\mu_{gas} - \mu_{oil})D$$

$$\ln\frac{I_{w}}{I_{oil}} = -(\mu_{w} - \mu_{oil})D$$

$$\alpha_{gas} = \frac{\ln\dfrac{I_{mix}}{I_{oil}} - \alpha_{w}\ln\dfrac{I_{w}}{I_{oil}}}{\ln\dfrac{I_{gas}}{I_{oil}}} \qquad (3)$$

where

$I_{mix}$ is the impulse count measured by the gamma detector for the unknown mixture.

Since the GRT system has narrow beams, it can be simpler to use the sum of any length for each component in the mixture as

$$a_{gas} = \alpha_{gas}D, \ a_{oil} = \alpha_{oil}D \ and \ a_{w} = \alpha_{w}D$$

The equation (3) can be then rewritten to

$$a_{gas} = \frac{D\ln\dfrac{I_{mix}}{I_{oil}} - a_{w}\ln\dfrac{I_{w}}{I_{oil}}}{\ln\dfrac{I_{gas}}{I_{oil}}} \qquad (4)$$

Taking into account that

$$a_{w} = 1 - a_{gas} - a_{oil}$$

The following equations can be obtained:

$$\mu_{mix} = \mu_{mix} = \mu_{gas}\alpha_{gas} + \mu_{oil}\alpha_{oil} + \mu_{w}D - \mu_{w}\alpha_{gas} - \mu_{w}\alpha_{oil}$$

$$\mu_{mix} = \alpha_{oil}(\mu_{oil} - \mu_{w}) + \alpha_{gas}(\mu_{gas} - \mu_{w}) + \mu_{w}$$

$$I_{mix} = I_{0}e^{-\mu_{mix}D - 2\mu_{d}d} = I_{0}e^{-\alpha_{oil}(\mu_{oil} - \mu_{w})D - \alpha_{gas}(\mu_{gas} - \mu_{w})D - \mu_{w}D - 2\mu_{d}d}$$

7

$$\frac{I_{mix}}{I_w} = e^{-\alpha_{oil}(\mu_{oil}-\mu_w)D - \alpha_{gas}(\mu_{gas}-\mu_w)D}$$

$$\frac{I_{oil}}{I_w} = e^{-(\mu_{oil}-\mu_w)D} \quad \text{and} \quad \frac{I_{gas}}{I_w} = e^{-(\mu_{gas}-\mu_w)D}$$

$$\alpha_{oil} = \frac{\ln\frac{I_{mix}}{I_w} - \alpha_{gas}\ln\frac{I_{gas}}{I_w}}{\ln\frac{I_{oil}}{I_w}} \qquad (5)$$

$$a_{oil} = \frac{D\ln\frac{I_{mix}}{I_w} - a_{gas}\ln\frac{I_{gas}}{I_w}}{\ln\frac{I_{oil}}{I_w}} \qquad (6)$$

By logical deduction:

$$\alpha_w = \frac{\ln\frac{I_{mix}}{I_{gas}} - \alpha_{oil}\ln\frac{I_{oil}}{I_{gas}}}{\ln\frac{I_w}{I_{gas}}} \qquad (7)$$

$$a_w = \frac{D\ln\frac{I_{mix}}{I_{gas}} - a_{oil}\ln\frac{I_{oil}}{I_{gas}}}{\ln\frac{I_w}{I_{gas}}} \qquad (8)$$

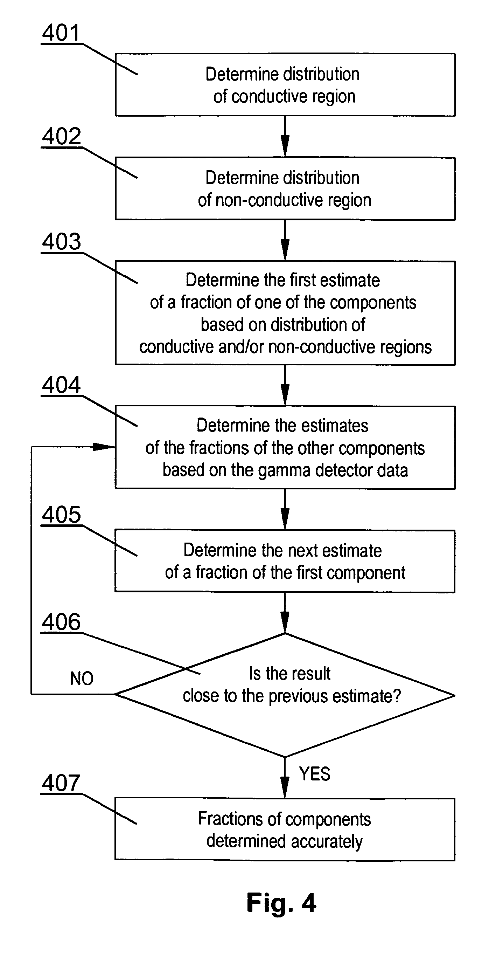

Fig. 4 presents steps of an iterative method for determining the fractions of water, oil and gas according to the invention. In step 401, the distribution of the conductive region is determined based on the resistance measurement data. In step 402, the distribution of the non-conductive region is determined based on the capacitance measurement data. Next, in step 403, the first estimate of a fraction of one of the components, namely water, oil or gas, is determined based on the distribution of the conductive region or non-conductive region. In case the flow comprises a conductive region, the fraction of water can be determined, as the boundary between the conductive and non-conductive region is best visible in the resistance measurement data. In case the flow comprises only a non-conductive region, the fraction of gas can be determined only in a rough manner, due to small permittivity differences between gas and oil. Next, in step 404, the estimates of the fractions of the other components are determined based on the gamma detector data, by using equations (3), (5) or (7), depending on the type of component. Then, in step 405, a next estimate of the first component is determined based on the last estimates of the two other components and equation

$$\alpha_{gas} + \alpha_{oil} + \alpha_w = 1$$

Next, it is checked whether the difference between the next estimate of the first component is sufficiently close to the previous estimate, i.e. lower than a predetermined threshold amount, such as the overall system accuracy, e.g. 2%. If not, the procedure returns to step 404 to find further estimates of the components, which will converge to a stable value in a number of iterations. If the estimate is sufficiently close to the previous estimate, the values of fractions of components are determined to be sufficiently accurate and provided as output data.

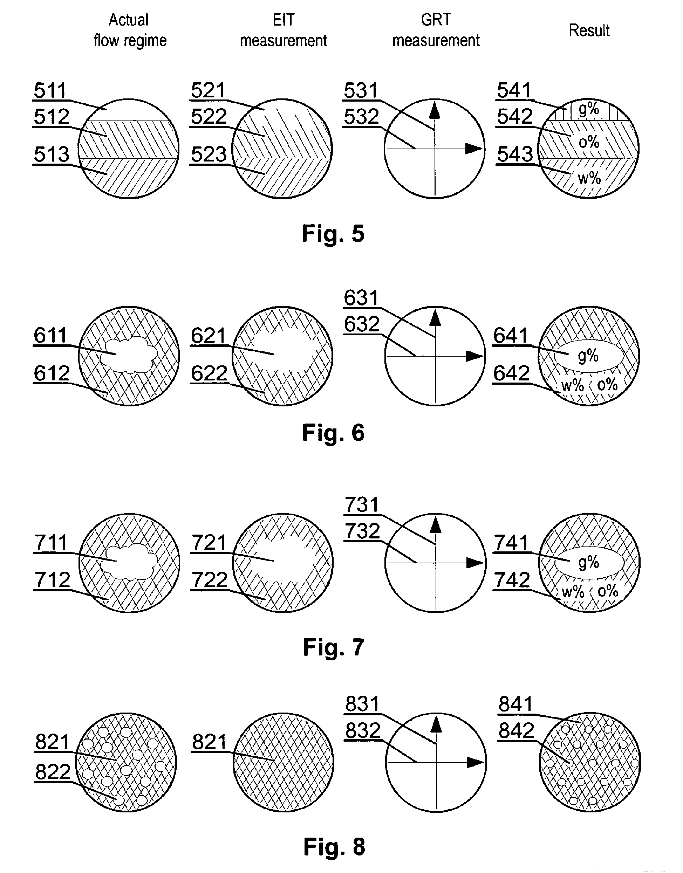

Figs. 5-8 present different flow regimes detectable by the method and device according to the invention.

The first flow regime shown in Fig. 5 is a typical stratified flow, comprising separate layers of water 513, oil 512 and gas 511. The conductive region formed by the layer of water can be easily detected by resistance-measurement electrodes of the EIT system, which will have low resistance between each other in the area filled by water. The inter phase between water 523 and oil 522 can be therefore determined with reasonable accuracy by the EIT system. However, the inter phase between oil 522 and gas 521 cannot be determined accurately, due to small differences in permitivities of gas and oil. However, the fraction of gas and oil can be accurately determined by the GRT system. The measured counts of the horizontal beam 532, i.e. the gamma detector data, will be $I_{mix}=I_{oil}$, indicating only oil in the beam and therefore indicating stratified flow. The fraction of gas $\alpha_{gas}$ can be determined based on the measured counts of the vertical beam 531, by putting $\alpha_w$ obtained from the EIT image into equation (3). Therefore, the distribution of the water 543 is determined based on the resistance measurement data and the distribution of the other components, namely oil and gas 542, 541, is determined based on the gamma detector data. Since the distribution of water was determined with high accuracy, there is no need for more than one iteration of steps 403-405 of the procedure.

The second flow regime shown in Fig. 6 is an annular gas concentration flow 611 in a mixture of water and oil 612, wherein the proportion of oil is higher than water, therefore the mixture is oil continuous and non-conductive. The mixture is non-conductive, therefore the resistance-measurement electrodes of the EIT system will indicate non-conductive component. The capacitance-measurement electrodes will provide an image with a diffuse boundary between the two non-conductive components 621 and 622. The first, rough estimate of the fraction of gas in the vertical and horizontal direction $\alpha_{gas1}$, $\alpha_{gas2}$ can be found from the capacitance measurement data 621 of the EIT image. Next, the first estimate of the fraction of oil $\alpha_{oil1}$ can be found from equation (5), based on gamma detector data for one diameter of the pipe, e.g. horizontal. Then, the first estimate of the fraction of water $\alpha_{w1}$ can be found from equation (7), based on gamma detector data. Then, a new value of the fraction of gas component can be determined from the equation

$$\alpha_{gas} = 1 - \alpha_{oil} - \alpha_w$$

If the new value of the fraction of gas differs from the previous value by an amount higher than a threshold amount, e.g. the accuracy of the system, the new value of the fraction of gas 641 can be used again in equation (5) to find a closer match for the fractions of water and oil 642. The iteration of steps 403-405 is performed until the values of fractions 641, 642 stabilize.

The procedure is performed both for the vertical 631 and horizontal 632 gamma beams.

The area of the gas bubble can be found approximately as

$$A_g = \frac{\pi}{4}\left(a_{gas1}a_{gas2}\right)$$

And the fraction of gas $\alpha_{gas}$ 641 can be found as

$$\alpha_{gas} = \frac{a_{gas1}a_{gas2}}{D^2}$$

The third flow regime shown in Fig. 7 is an annular gas concentration flow 711 in a mixture of water and oil 712, wherein the proportion of oil is lower than water, therefore the mixture is water continuous and conductive. The resistance-measurement electrodes of the EIT system will provide an image with a diffuse boundary between the conductive and non-conductive components 721 and 722, wherein due to higher difference in conductivities, the boundary will be less diffuse than in case of example of Fig. 6. The first, rough estimate of the fraction of gas 741 in the vertical and horizontal direction $\alpha_{gas1}$, $\alpha_{gas2}$ can be found from the resistance measurement data 721 of the EIT image. Next, the first estimates of the fractions of oil and water 742 can be found from equations (5) and (7), similarly as in case of Fig. 6. Due to higher accuracy of resistance-measurement data, the procedure will involve a smaller number of iterations to find accurate fractions of components.

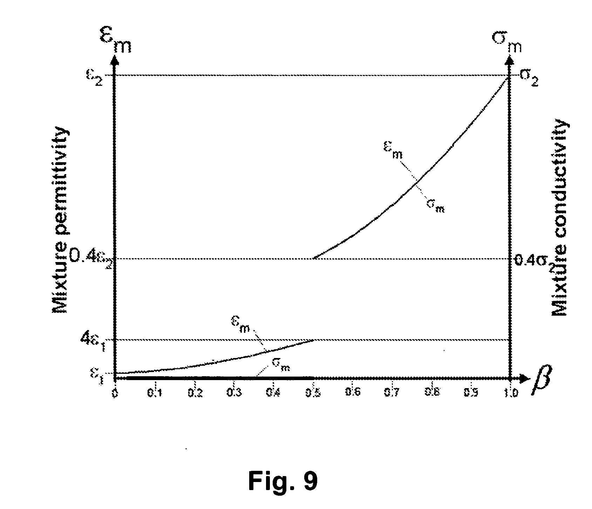

The fourth flow regime shown in Fig. 8 is a semi mixed flow regime with a mixture of water and oil 811 as well as gas bubbles 812, for which neither the capacitance measurement data nor the resistance measurement data 821 will image the gas bubbles. However, the mean capacitance and conductance can be found between the capacitance measurement electrodes and the resistance measurement electrodes, which enables calculation of the mixture permittivity and conductivity using modified equations for crude oil and process water based on Ramo and Raus formulae, shown schematically in Fig. 9.

The modified formulae are:

For oil continuous mixture:

$$\varepsilon_{liq} = \varepsilon_{oil} \frac{1 + 2\beta_w}{1 - \beta_w} \qquad (9)$$

For water continuous mixture:

$$\sigma_{liq} = \sigma_w \frac{2\beta_w}{3 - \beta_w} \qquad (10)$$

where:

$$\beta_w = \frac{\alpha_w}{\alpha_{oil} + \alpha_w}$$

For an oil continuous mixture,

$$\overline{C}_{mix} = \frac{1}{n} \sum_{i=1}^{n} C_i = \varepsilon_0 \varepsilon_{mix} \frac{1}{n} \sum_{i=1}^{n} K_i = \overline{K} \varepsilon_0 \varepsilon_{mix} \qquad (11)$$

where $n = \dfrac{N(N-1)}{2}$ is the total number of capacitance-measurement electrode pairs.

The change from crude oil continuous to process water continuous mixture will normally occur at

$$\beta_c = \frac{\alpha_w}{\alpha_{oil} + \alpha_w} = 0.7 - 0.8$$

The liquid permittivity in oil continuous mixtures can be found from equation (9)

$$\varepsilon_{liq} = \varepsilon_{oil} \frac{1 + 2\beta_w}{1 - \beta_w}$$

where $\beta_w = \dfrac{\alpha_w}{\alpha_{oil} + \alpha_w}$ is the water cut in the oil/water mixture.

The formula for the liquid cut $\beta_{liq}$ in the total liquid/gas mixture is:

$$\beta_{liq} = \frac{\alpha_{liq}}{\alpha_{gas} + \alpha_{liq}} = \frac{\alpha_{oil} + \alpha_w}{\alpha_{gas} + \alpha_{oil} + \alpha_w} = \alpha_{oil} + \alpha_w = 1 - \alpha_{gas} \qquad (12)$$

Then the mixture relative permittivity is

$$\varepsilon_{mix} = \varepsilon_{gas} \frac{1 + 2\beta_{liq}}{1 - \beta_{liq}} = \varepsilon_{gas} \frac{1 + 2(1 - \alpha_{gas})}{\alpha_{gas}} \qquad (13)$$

By using equation (8),

$$\varepsilon_{mix} = \frac{\overline{C}_{mix}}{\overline{K}_i \varepsilon_0} = \varepsilon_g \frac{1 + 2(1 - \alpha_{gas})}{\alpha_{gas}} \qquad (14)$$

And hence

$$\alpha_{gas} = \frac{3\varepsilon_{gas}}{\varepsilon_{mix} + 2\varepsilon_{gas}} = \frac{3\varepsilon_{gas}}{\dfrac{\overline{C}_{mix}}{\overline{K}_i \varepsilon_0} + 2\varepsilon_{gas}} \approx \frac{3\overline{K}_i \varepsilon_0}{\overline{C}_{mix} + 2\overline{K}_i \varepsilon_0} \qquad (15)$$

Therefore, equation (15) allows determining the first estimate of the fraction of gas 842 in the mixture. Next, the fractions of oil and water 841, $\alpha_{oil}$ and $\alpha_w$, can be found by using equations (5) and (7), in one or more iterations, based on the gamma detector data 831, 832, depending on the precision of the first estimate of the fraction of gas in the mixture.

For water continuous mixtures, the only conductive component is water. The two other components, gas and oil, are non conductive. Therefore, the water fraction in the mixture is:

$$\beta = \frac{\alpha_w}{\alpha_w + \alpha_{oil} + \alpha_{gas}} = \alpha_w \qquad (16)$$

$$\sigma_{mix} = \sigma_W \frac{2\beta}{3 - \beta} = \sigma_w \frac{2\alpha_w}{3 - \alpha_w} \qquad (17)$$

Similarly to equation (11) the mean conductivity for water continuous mixtures is:

$$\overline{G}_i = \frac{1}{N} \sum_1^N \frac{1}{R_i} = \sigma_{mix} \frac{1}{N} \sum_1^N K_i^w = \sigma_{mix} \overline{K}_i^w \qquad (18)$$

$$\sigma_{mix} = \frac{\overline{G}_i}{\overline{K}_i^w} = \sigma_w \frac{2\alpha_w}{3 - \alpha_w} \qquad (19)$$

$$\alpha_w = \frac{3 \dfrac{\overline{G}_i}{\overline{K}_i^w}}{\dfrac{\overline{G}_i}{\overline{K}_i^w} + 2\sigma_w} = \frac{3\sigma_{mix}}{\sigma_{mix} + 2\sigma_w} \qquad (20)$$

Therefore, equation (20) allows determining the first estimate of the fraction of water in the mixture. Next, the fractions of gas and oil, $\alpha_{gas}$ and $\alpha_{oil}$, can be found by using equations (3) and (5), in one or more iterations, based on the gamma detector data 831, 832, depending on the precision of the first estimate of the fraction of water in the mixture.

**Claims**

1. A method for measuring component fractions in a multi-phase flow in a pipe (101, 201), the components forming conductive and/or non-conductive regions in the multi-phase flow, comprising the steps of:

   - collecting, from an Electric Inductance Tomography (EIT) system (310) with a plurality of electrodes (121, 131, 220) arranged evenly at the periphery of a cross-section of the pipe (101, 201), resistance measurement data and capacitance measurement data indicative of different areas of the cross-section of the pipe (101, 201),
   - collecting, from a Gamma Ray Tomography (GRT) system (320) with at least two gamma source-detector pairs (141-142, 241-242) arranged evenly at the periphery of a cross-section of the pipe (101, 201), gamma detector data,
   - determining a distribution of the conductive region based on the resistance measurement data,
   - determining a distribution of the non-conductive region based on the capacitance measurement data,
   - **characterized by** determining the fractions of components based on the distribution of the conductive region or non-conductive region corrected by gamma detector data in at least one iteration, wherein:

      a first estimate of the fraction of one of the components is determined based on the distribution of the conductive or non-conductive region and the first estimate of the fractions of the other components is determined based on the gamma detector data,
      the estimate of the fractions of the components is determined based on the gamma detector data that is iterated until the difference between estimates in consecutive iterations is below a predetermined threshold.

2. The method according to claim 1, wherein the resistance measurement data are provided as values of resistance between all combinations of pairs of resistance-measurement electrodes (131), the capacitance measurement data are provided as values of capacitance between all combinations of pairs of capacitance-measurement electrodes (121), and the gamma detector data are provided as impulse counts measured by the gamma detectors (142, 242).

3. The method according to claim 2, wherein the components are water, oil and gas and the determination of the estimate of the fractions of the components is based on the following equations:

$$\alpha_{gas} = \frac{\ln \frac{I_{mix}}{I_{oil}} - \alpha_w \ln \frac{I_w}{I_{oil}}}{\ln \frac{I_{gas}}{I_{oil}}}$$

$$\alpha_{oil} = \frac{\ln \frac{I_{mix}}{I_w} - \alpha_{gas} \ln \frac{I_{gas}}{I_w}}{\ln \frac{I_{oil}}{I_w}}$$

$$\alpha_w = \frac{\ln \frac{I_{mix}}{I_{gas}} - \alpha_{oil} \ln \frac{I_{oil}}{I_{gas}}}{\ln \frac{I_w}{I_{gas}}}$$

where:

   $\alpha_{gas}$, $\alpha_{oil}$, $\alpha_w$ are the fractions of the gas, oil and water components in the gamma beam,
   $I_{gas}$, $I_{oil}$, $I_w$, $I_{mix}$, are impulse counts measured by the gamma detector for gas, oil, water and unknown mixture, respectively.

4. A device for measuring component fractions in a multi-phase flow in a pipe (101, 201), the components forming conductive and/or non-conductive regions in the multi-phase flow, the device comprising:

- an Electric Inductance Tomography (EIT) system (310) with a plurality of electrodes (121, 131, 220) arranged evenly at the periphery of a cross-section of the pipe (101, 201), and configured to provide resistance measurement data and capacitance measurement data indicative of different areas of the cross-section of the pipe (101, 201),
- a Gamma Ray Tomography (GRT) system (320) with at least two gamma source-detector pairs (141-142, 241-242) arranged evenly at the periphery of a cross-section of the pipe (101, 201) and configured to provide gamma detector data,

**characterized in that** it further comprises:

- a calculating unit (330) configured to

- collect measurement data,
- determine a distribution of the conductive region based on the resistance measurement data,
- determine a distribution of the non-conductive region based on the capacitance measurement data,
- determine the fractions of components based on the distribution of the conductive region and/or non-conductive region corrected by gamma detector data in at least one iteration, wherein:

• a first estimate of the fraction of one of the components is determined based on the distribution of the conductive or non-conductive region and the first estimate of the fractions of the other components is determined based on the gamma detector data,
• the estimate of the fractions of the components is determined based on the gamma detector data that is iterated until the difference between estimates in consecutive iterations is below a predetermined threshold.

5. The device according to claim 4, wherein the resistance measurement data are provided as values of resistance between all combinations of pairs of resistance-measurement electrodes (131), the capacitance measurement data are provided as values of capacitance between all combinations of pairs of capacitance-measurement electrodes (121), and the gamma detector data are provided as impulse counts measured by the gamma detectors (142, 242).

6. The device according to claim 4, wherein the electrodes (220) comprise a set of resistance-measurement plate electrodes arranged alternately with capacitance-measurement electrodes.

7. The device according to claim 4, wherein the electrodes (220) comprise a set of plate electrodes configured to function as resistance or capacitance electrodes, depending on the type of flow component between a particular pair of electrodes.

8. The device according to claim 4, wherein the electrodes (121, 131) comprise a set of resistance-measurement pin electrodes (131) arranged within capacitance-measurement plate electrodes (121).

9. The device according to any of claims 4 to 8 comprising at least 16 electrodes.

10. The device according to any of claims 4 to 9, wherein the electrodes (121, 131, 220) and the gamma source-detector pairs (141-142, 241-242) are arranged at the periphery of the same cross-section of the pipe (101, 201).

11. The device according to claim 10, wherein the components are water, oil and gas and the calculating unit (330) is configured to determine the estimate of the fractions of the components based on the following equations:

$$\alpha_{gas} = \frac{\ln\dfrac{I_{mix}}{I_{oil}} - \alpha_w \ln\dfrac{I_w}{I_{oil}}}{\ln\dfrac{I_{gas}}{I_{oil}}}$$

$$\alpha_{oil} = \frac{\ln\dfrac{I_{mix}}{I_w} - \alpha_{gas} \ln\dfrac{I_{gas}}{I_w}}{\ln\dfrac{I_{oil}}{I_w}}$$

$$\alpha_w = \frac{\ln\dfrac{I_{mix}}{I_{gas}} - \alpha_{oil} \ln\dfrac{I_{oil}}{I_{gas}}}{\ln\dfrac{I_w}{I_{gas}}}$$

where:

$\alpha_{gas}$, $\alpha_{oil}$, $\alpha_w$ are the fractions of the gas, oil and water components in the gamma beam,
$I_{gas}$, $I_{oil}$ $I_w$, $I_{mix}$, are impulse counts measured by the gamma detector for gas, oil, water and unknown mixture, respectively.

**Patentansprüche**

1. Methode zum Messen der Anteile der Komponenten in einem mehrphasig durchströmten Rohr (101, 201) - wobei die Komponenten in dem mehrphasigen Strom leitende und/oder nicht leitende Bereiche bilden -, die folgende Schritte umfasst:

   - das Sammeln von Daten der Widerstandsmessung mit einem System (310) für die Elektrische Impedanztomographie (EIT) mit einer Vielzahl von Elektroden (121, 131, 220), die gleichmäßig am Rand einer Schnittfläche des Rohres (101, 201) angeordnet sind sowie von Daten der Kapazitätsmessung, die für verschiedene Bereiche der Schnittfläche des Rohres (101, 201) bezeichnend sind,
   - das Sammeln von Gammadetektordaten mit einem System (320) für die Gammastrahlentomographie (GRT) mit mindestens zwei Paar Detektoren für die Gammastrahlungsquelle (141-142, 241-242), die gleichmäßig am Rand einer Schnittfläche des Rohres (101, 201) angeordnet sind,
   - die Bestimmung der Ausbreitung des leitenden Bereichs auf Grundlage der Daten aus der Widerstandsmessung,
   - die Bestimmung der Ausbreitung des nicht leitenden Bereichs auf Grundlage der Daten aus der Kapazitätsmessung,
   - charakterisiert durch die Bestimmung der Anteile der Komponenten auf Grundlage der Ausbreitung des leitenden oder nicht leitenden Bereichs, die in mindestens einem Durchlauf mithilfe der Gammadetektordaten berichtigt wurden, wobei:

      eine erste Schätzung für den Anteil einer der Komponenten auf Grundlage der Ausbreitung des leitenden oder nicht leitenden Bereichs und die erste Schätzung für die Anteile der anderen Komponenten auf Grundlage der Gammadetektordaten erfolgt,
      die Schätzung der Anteile der Komponenten auf Grundlage der Gammadetektordaten erfolgt, die so lange

14

wiederholt wird, bis die Differenz zwischen den Schätzungen bei aufeinanderfolgenden Durchläufen unterhalb eines festgelegten Schwellenwerts liegt.

2. Methode nach Anspruch 1, wobei die Daten der Widerstandsmessung als Widerstandswerte von sämtlichen Kombinationen von Paaren der Elektroden zur Widerstandsmessung (131) ausgegeben werden; die Daten der Kapazitätsmessung werden als Kapazitätswerte von sämtlichen Kombinationen von Paaren der Elektroden zur Kapazitätsmessung (121) ausgegeben und die Gammadetektordaten werden als Impulszahlen ausgegeben, die von den Gammadetektoren (142, 242) gemessen werden.

3. Methode nach Anspruch 2, wobei die Komponenten Wasser, Öl und Gas sind und die Bestimmung der Schätzung der Anteile der Komponenten auf Grundlage der folgenden Gleichungen erfolgt:

$$\alpha_{gas} = \frac{\ln \frac{I_{mix}}{I_{oil}} - \alpha_w \ln \frac{I_w}{I_{oil}}}{\ln \frac{I_{gas}}{I_{oil}}}$$

$$\alpha_{oil} = \frac{\ln \frac{I_{mix}}{I_w} - \alpha_{gas} \ln \frac{I_{gas}}{I_w}}{\ln \frac{I_{oil}}{I_w}}$$

$$\alpha_w = \frac{\ln \frac{I_{mix}}{I_{gas}} - \alpha_{oil} \ln \frac{I_{oil}}{I_{gas}}}{\ln \frac{I_w}{I_{gas}}}$$

wobei:

$\alpha_{gas}$, $\alpha_{oil}$, $\alpha_w$ die Anteile der Komponenten Gas, Öl und Wasser im Gammastrahl darstellen und
$I_{gas}$, $I_{oil}$, $I_w$, $I_{mix}$, die jeweils vom Gammadetektor gemessenen Impulszahlen für Gas, Öl, Wasser und das unbekannte Gemisch sind.

4. Gerät zum Messen der Anteile der Komponenten in einem mehrphasig durchströmten Rohr (101, 201) - wobei die Komponenten in dem mehrphasigen Strom leitende und/oder nicht leitende Bereiche bilden -, das folgende Schritte umfasst:

- ein System (310) für die Elektrische Impedanztomographie (EIT) mit einer Vielzahl von Elektroden (121, 131, 220), die gleichmäßig am Rand einer Schnittfläche des Rohres (101, 201) angeordnet und so konfiguriert sind, dass sie Daten der Widerstands- und
Kapazitätsmessung ausgeben, die für verschiedene Bereiche der Schnittfläche des Rohres (101, 201) bezeichnend sind,
- ein System (320) für die Gammastrahlentomographie (GRT) mit mindestens zwei Paar Detektoren für die Gammastrahlungsquelle (141-142, 241-242), die gleichmäßig am Rand einer Schnittfläche des Rohres (101, 201) angeordnet und so konfiguriert sind, dass sie Gammadetektordaten ausgeben,

dadurch charakterisiert, dass es zudem Folgendes umfasst:

- eine Recheneinheit (330), die so konfiguriert ist, dass sie
- Messdaten sammelt,
- die Ausbreitung des leitenden Bereichs auf Grundlage der Daten aus der Widerstandsmessung bestimmt,
- die Ausbreitung des nicht leitenden Bereichs auf Grundlage der Daten aus der Kapazitätsmessung bestimmt,
- die Anteile der Komponenten auf Grundlage der Ausbreitung des leitenden und/oder nicht leitenden Bereichs bestimmt, die mindestens in einem Durchlauf mithilfe der Gammadetektordaten berichtigt wurden, wobei:

• eine erste Schätzung für den Anteil einer der Komponenten auf Grundlage der Ausbreitung des leitenden oder nicht leitenden Bereichs und die erste Schätzung für die Anteile der anderen Komponenten auf Grundlage der Gammadetektordaten erfolgt,
• die Schätzung der Anteile der Komponenten auf Grundlage der Gammadetektordaten erfolgt, die so lange wiederholt wird, bis die Differenz zwischen den Schätzungen bei aufeinanderfolgenden Durchläufen unterhalb eines festgelegten Schwellenwerts liegt.

5. Gerät nach Anspruch 4, wobei die Daten der Widerstandsmessung als Widerstandswerte von sämtlichen Kombinationen von Paaren der Elektroden zur Widerstandsmessung (131) ausgegeben werden; die Daten der Kapazitätsmessung werden als Kapazitätswerte von sämtlichen Kombinationen von Paaren der Elektroden zur Kapazitätsmessung (121) ausgegeben und die Gammadetektordaten werden als Impulszahlen ausgegeben, die von den Gammadetektoren (142, 242) gemessen werden.

6. Gerät nach Anspruch 4, wobei die Elektroden (220) einen Satz Plattenelektroden zur Widerstandsmessung umfassen, die abwechselnd mit Elektroden zur Kapazitätsmessung angeordnet sind.

7. Gerät nach Anspruch 4, wobei die Elektroden (220) einen Satz Plattenelektroden umfassen, die so konfiguriert sind, dass sie, in Abhängigkeit von der jeweiligen Art der Komponente, die zwischen einem bestimmten Elektrodenpaar hindurchströmt, als Elektroden zur Widerstands- oder zur Kapazitätsmessung fungieren können.

8. Gerät nach Anspruch 4, wobei die Elektroden (121, 131) einen Satz Stiftelektroden (131) zur Widerstandsmessung umfassen, die inmitten von Plattenelektroden zur Kapazitätsmessung (121) angeordnet sind.

9. Gerät nach einem der Ansprüche 4 bis 8, das mindestens 16 Elektroden umfasst.

10. Gerät nach einem der Ansprüche 4 bis 9, wobei die Elektroden (121, 131, 220) und die Detektorpaare für die Gammastrahlungsquelle (141-142, 241-242) am Rand der gleichen Schnittfläche des Rohres (101, 201) angeordnet sind.

11. Gerät nach Anspruch 10, wobei die Komponenten Wasser, Öl und Gas sind und die Recheneinheit (330) so konfiguriert ist, dass sie die Schätzung der Anteile der Komponenten auf Grundlage der folgenden Gleichungen bestimmt:

$$\alpha_{gas} = \frac{\ln \frac{I_{mix}}{I_{oil}} - \alpha_w \ln \frac{I_w}{I_{oil}}}{\ln \frac{I_{gas}}{I_{oil}}}$$

$$\alpha_{oil} = \frac{\ln \frac{I_{mix}}{I_w} - \alpha_{gas} \ln \frac{I_{gas}}{I_w}}{\ln \frac{I_{oil}}{I_w}}$$

$$\alpha_w = \frac{\ln \frac{I_{mix}}{I_{gas}} - \alpha_{oil} \ln \frac{I_{oil}}{I_{gas}}}{\ln \frac{I_w}{I_{gas}}}$$

wobei:

$\alpha_{gas}$, $\alpha_{oil}$, $\alpha_w$ die Anteile der Komponenten Gas, Öl und Wasser im Gammastrahl darstellen und $I_{gas}$, $I_{oil}$, $I_w$, $I_{mix}$, die jeweils vom Gammadetektor gemessenen Impulszahlen für Gas, Öl, Wasser und das unbekannte Gemisch sind.

**Revendications**

1. Une méthode de mesure des fractions de composants dans un écoulement à phases multiples dans un tuyau (101, 201), les composants formant des zones conductrices et/ou non conductrices d'un écoulement à phases multiples, comportant les opérations suivantes :

   - saisie, dans un système de tomographie par inductance électrique (EIT) (310) avec une série d'électrodes (121, 131, 220) disposées de façon régulière sur le pourtour de la section transversale du tuyau (101, 201), de données sur la mesure de la résistance et des données de mesure de capacité indicatives de différentes zones de la section transversale du tuyau (101, 201),
   - saisie de données du détecteur gamma dans un système de tomographie aux rayons gamma (GRT) (320) avec un minimum de deux paires de source / détecteur gamma (141-142, 241-242) disposées de façon régulière sur le pourtour d'une section transversale du tuyau (101, 201),
   - détermination d'une distribution de la zone conductrice sur la base des données de mesure de la résistance,
   - détermination d'une distribution de la zone non conductrice sur la base des données de mesure de la résistance,
   - **caractérisée par** la détermination des fractions de composants sur la base de la distribution de la zone conductrice ou de la zone non conductrice corrigées par des données de détecteur gamma dans au minimum une itération, dans laquelle :

     une première estimation de la fraction d'un des composants est déterminée sur la base de la distribution de la zone conductrice ou non conductrice, et la première estimation des fractions des autres composants est déterminée sur la base des données de détecteur gamma,
     l'estimation des fractions des composants est déterminée sur la base des données de détecteur gamma itérées jusqu'à ce que la différence entre estimations dans des itérations consécutives est inférieure à un seuil prédéterminé.

2. La méthode selon la revendication 1, dans laquelle les données de mesure de la résistance sont fournies comme valeurs de résistance entre toutes les combinaisons de paires d'électrodes de mesure de la résistance (131), les données de mesure de capacité sont fournies comme valeurs de capacité entre toutes les combinaisons de paires d'électrodes de mesure de capacité (121), et les données de détecteur gamma sont fournies comme des comptages d'impulsion mesurés par les détecteurs gamma (142, 242).

3. La méthode selon la revendication 2, dans laquelle les composants sont l'eau, le pétrole et le gaz, et la détermination de l'estimation des fractions des composants est basée sur l'équation suivante :

$$\alpha_{gas} = \frac{\ln \frac{I_{mix}}{I_{oil}} - \alpha_w \ln \frac{I_w}{I_{oil}}}{\ln \frac{I_{gas}}{I_{oil}}}$$

$$\alpha_{oil} = \frac{\ln\dfrac{I_{mix}}{I_w} - \alpha_{gas}\ln\dfrac{I_{gas}}{I_w}}{\ln\dfrac{I_{oil}}{I_w}}$$

$$\alpha_w = \frac{\ln\dfrac{I_{mix}}{I_{gas}} - \alpha_{oil}\ln\dfrac{I_{oil}}{I_{gas}}}{\ln\dfrac{I_w}{I_{gas}}}$$

dans laquelle :

$\alpha_{gas}$, $\alpha_{oil}$ et $\alpha_w$ sont les fractions des composants suivants : gaz, pétrole et eau dans le rayonnement gamma, $I_{gas}$, $I_{oil}$, $I_w$, $I_{mix}$, sont des comptages d'impulsion mesurés par le détecteur gamma pour le gaz, le pétrole, l'eau, et un mélange inconnu respectivement.

**4.** Un dispositif de mesure des fractions composantes dans un écoulement à phases multiples dans un tuyau (101, 201), les composants formant des zones conductrices et/ou non conductrices de l'écoulement à phases multiples, ce dispositif comprenant :

- un système de tomographie par inductance électrique (EIT) (310) avec une série d'électrodes (121, 131, 220) disposées de façon régulière sur le pourtour de la section transversale du tuyau (101, 201), et configurées pour fournir des données sur la mesure de la résistance et des données de mesure de capacité indicatives de différentes zones de la section transversale du tuyau (101, 201).
- un système de tomographie aux rayons gamma (GRT) (320) avec un minimum de deux paires de source / détecteur gamma (141-142, 241-242) disposées de façon régulière sur le pourtour d'une section transversale du tuyau (101, 201), et configurées pour fournir des données de détecteur gamma,
**caractérisé par le fait qu'**il comprend en outre :

- un dispositif de calcul (330) configuré pour

- recueillir des données de mesure,
- déterminer une distribution de la zone conductrice sur la base des données de mesure de la résistance,
- déterminer une distribution de la zone non conductrice sur la base des données de mesure de capacité,
- déterminer les fraction de composants sur la base de la distribution de la zone conductrice et/ou de la zone non conductrice corrigées par des données de détecteur gamma dans au minimum une itération, dans laquelle :

• une première estimation de la fraction d'un des composants est déterminée sur la base de la distribution de la zone conductrice ou non conductrice, et la première estimation des fractions des autres composants est déterminée sur la base des données de détecteur gamma,
• l'estimation des fractions des composants est déterminée sur la base des données de détecteur gamma itérées jusqu'à ce que la différence entre estimations dans des itérations consécutives est inférieure à un seuil prédéterminé.

**5.** Le dispositif selon la revendication 4, dans lequel les données de mesure de la résistance sont fournies sous forme de valeurs de résistance entre toutes les combinaisons de paires d'électrodes de mesure de la résistance (131), les données de mesure de capacité sont fournies sous forme de valeurs de capacité entre toutes les combinaisons de paires d'électrodes de mesure de capacité (121), et les données du détecteur gamma sont fournies sous forme d'impulsions mesurées par les détecteurs gamma (142, 242).

**6.** Le dispositif selon la revendication 4, dans lequel les électrodes (220) comprennent un jeu d'électrodes à plaque pour la mesure de la résistance disposées de façon qu'elles s'alternent avec des électrodes de mesure de capacité.

**7.** Le dispositif selon la revendication 4, dans lequel les électrodes (220) comprennent un jeu d'électrodes à plaque configurées comme des électrodes à résistance ou à capacité, selon le type de composants d'écoulement entre une certaine paire d'électrodes.

**8.** Le dispositif selon la revendication 4, dans lequel les électrodes (121, 131) comprennent un jeu d'électrodes à broche de mesure de capacité (131) disposées au sein d'électrodes à plaque de mesure de capacité (121).

**9.** Le dispositif selon une quelconque des revendications 4 à 8 composé d'au moins 16 électrodes.

**10.** Le dispositif selon une quelconque des revendications 4 à 9 dans lequel les électrodes (121, 131, 220) et les paires de détecteurs de source gamma (141 - 142, 241 -242) sont disposées sur le pourtour de la même section transversale du tuyau (101, 201).

**11.** Le dispositif selon la revendication 10, dans lequel les composants sont l'eau, le pétrole et le gaz, et le dispositif de calcul (330) est configuré pour déterminer l'estimation des fractions des composants conformément aux équations suivantes :

$$\alpha_{gas} = \frac{\ln\dfrac{I_{mix}}{I_{oil}} - \alpha_w \ln\dfrac{I_w}{I_{oil}}}{\ln\dfrac{I_{gas}}{I_{oil}}}$$

$$\alpha_{oil} = \frac{\ln\dfrac{I_{mix}}{I_w} - \alpha_{gas} \ln\dfrac{I_{gas}}{I_w}}{\ln\dfrac{I_{oil}}{I_w}}$$

$$\alpha_{w} = \frac{\ln\dfrac{I_{mix}}{I_{gas}} - \alpha_{oil} \ln\dfrac{I_{oil}}{I_{gas}}}{\ln\dfrac{I_w}{I_{gas}}}$$

dans lesquelles :

$\alpha_{gas}$, $\alpha_{oil}$, et $\alpha_w$ sont les fractions de composants suivants : gaz, pétrole et eau dans le rayonnement gamma, $I_{gas}$, $I_{oil}$, $I_w$, $I_{mix}$, sont des comptages d'impulsion mesurés par le détecteur gamma pour le gaz, le pétrole, l'eau et un mélange inconnu respectivement.

**Fig. 1**

**Fig. 2**

**Fig. 3**

401 — Determine distribution of conductive region

402 — Determine distribution of non-conductive region

403 — Determine the first estimate of a fraction of one of the components based on distribution of conductive and/or non-conductive regions

404 — Determine the estimates of the fractions of the other components based on the gamma detector data

405 — Determine the next estimate of a fraction of the first component

406 — Is the result close to the previous estimate?

NO

YES

407 — Fractions of components determined accurately

**Fig. 4**

Actual
flow regime

EIT
measurement

GRT
measurement

Result

511
512
513

521
522
523

531
532

541
542
543

g%
o%
w%

## Fig. 5

611
612

621
622

631
632

641
642

g%
w%  o%

## Fig. 6

711
712

721
722

731
732

741
742

g%
w%  o%

## Fig. 7

821
822

821

831
832

841
842

## Fig. 8

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090126502 A